Europäisches Patentamt

European Patent Office

Office européen des brevets

(11) Numéro de publication: **0 272 165 B1**

# FASCICULE DE BREVET EUROPEEN

(45) Date de publication de fascicule du brevet: **23.09.92**

(51) Int. Cl.5: **G06F 11/20**

(21) Numéro de dépôt: **87402431.8**

(22) Date de dépôt: **28.10.87**

(54) **Dispositif de calcul reconfigurable.**

(30) Priorité: **31.10.86 FR 8615241**

(43) Date de publication de la demande:
**22.06.88 Bulletin 88/25**

(45) Mention de la délivrance du brevet:
**23.09.92 Bulletin 92/39**

(84) Etats contractants désignés:
**DE FR GB IT NL**

(56) Documents cités:
**EP-A- 0 062 463**
**EP-A- 0 139 069**
**FR-A- 2 343 379**
**FR-A- 2 569 071**
**GB-A- 2 079 997**

**IEEE PROCEEDINGS OF THE FIRST ANNUAL SYMPOSIUM ON COMPUTER ARCHITECTURE, University of Florida, 9-11 décembre 1973, Symposium 1, pages 141-145, IEEE, New York, US; B. PARHAMI et al.: "Design of fault-tolerant associative processors"**

**Electronics International; volume 56; Janvier 1983;no 2; New York; US; pages 94 à 97**

(73) Titulaire: **THOMSON-CSF**
**51, Esplanade du Général de Gaulle**
**F-92800 Puteaux(FR)**

(72) Inventeur: **De Corlieu, Patrick**
**THOMSON-CSF SCPI 19, avenue de Messine**
**F-75008 Paris(FR)**
Inventeur: **Prevost, Michel**
**THOMSON-CSF SCPI 19, avenue de Messine**
**F-75008 Paris(FR)**
Inventeur: **Du Chéné, Arnaud**
**THOMSON-CSF SCPI 19, avenue de Messine**
**F-75008 Paris(FR)**

(74) Mandataire: **Benoit, Monique et al**
**THOMSON-CSF SCPI**
**F-92045 PARIS LA DEFENSE CEDEX 67(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

L'invention a principalement pour objet un dispositif de calcul reconfigurable.

Les calculateurs deviennent de plus en plus complexes. Les tendances actuelles de la construction de calculateur consistent notamment en des développements des calculateurs comportant une pluralité de processeurs traitant simultanément la même instruction (SIMD en terminologie anglo-saxonne). Un calculateur moderne est susceptible d'être en panne de façon partielle, c'est-à-dire qu'une partie des résultats délivrée par le calculateur est erronée, une autre partie des calculs n'étant pas affectée par la panne. Le dispositif objet de la présente invention est un calculateur susceptible de fonctionner même dans le cas où une partie de ces constituants présente des défauts de fonctionnement. Par exemple, si la panne survient au niveau d'un processeur il est possible de ne pas l'utiliser dans la suite des calculs.

Dans le premier cas, où l'on dispose d'un nombre de processeurs supérieur au nombre nécessaire pour effectuer les calculs, le processeur défectueux est désactivé ; un processeur libre reprend le calcul qui devait être effectué par le processeur défectueux.

Dans le second cas, les processeurs en ordre de marche se répartissent le travail du processeur défectueux, celui-ci étant mis hors circuit.

Ainsi, dans les deux cas on a effectué une reconfiguration du calculateur. Plusieurs solutions de reconfiguration de dispositifs de calcul sont déjà proposées notamment par l'invention revendiquée par le brevet GB-A2079997 ainsi que par l'article "Design of Fault-tolerant associative processors" de B. Parhami & Anzienis dans la revue "IEEE proceedings of the first annual symposium on computer architecture,
University of Florida" des 9 au 11 Décembre 1973 Symposium 1, pages 141 à 145, et par l'article "Fault-tolerant computers : Multiprocessor architecture tunes in to transaction processing" de K.I. COHEN paru dans la revue "Electronics International" du 27 Janvier 1983 pages 94 à 97. Or, on utilise de plus en plus le calculateur pour la supervision, en temps réel des machines. Une reconfiguration à un moment critique, dans la mesure où une partie des résultats délivrés par le calculateur reste valable, peut avoir des conséquences bien plus néfastes que n'aurait la poursuite des calculs par le calculateur partiellement défectueux. En effet, une reconfiguration risque de faire perdre au calculateur les résultats des calculs en cours ainsi que les résultats intermédiaires.

Le but de l'invention est de pallier les inconvénients pré-cités.

A cet effet l'invention a pour objet le dispositif décrit dans la revendication 1.

L'invention sera mieux comprise au moyen de la description ci-après et des figures annexées données comme des exemples non limitatifs parmi lesquels :
- la figure 1 est un schéma d'un calculateur selon l'invention ;
- la figure 2 est le schéma d'un processeur du calculateur de la figure 1 ;
- la figure 3 est un schéma d'une unité arithmétique et logique et des indicateurs d'un processeur du calculateur de la figure 1 ;
- la figure 4 est un schéma du processeur du calculateur de la figure 1 ;
- la figure 5 est un organigramme illustrant un procédé mis en oeuvre dans le dispositif selon l'invention ;
- la figure 6 est un organigramme illustrant un procédé mis en oeuvre dans le dispositif selon l'invention ;
- la figure 7 est un organigramme illustrant un procédé mis en oeuvre dans le dispositif selon l'invention ;
- la figure 8 est un organigramme illustrant un procédé mis en oeuvre dans le dispositif selon l'invention ;
- la figure 9 est un organigramme illustrant un procédé mis en oeuvre dans le dispositif selon l'invention ;
- la figure 10 est un organigramme illustrant un procédé mis en oeuvre dans le dispositif selon l'invention ;
- la figure 11 est un organigramme illustrant un procédé mis en oeuvre dans le dispositif selon l'invention ;
- la figure 12 est un organigramme illustrant un procédé mis en oeuvre dans le dispositif selon l'invention.

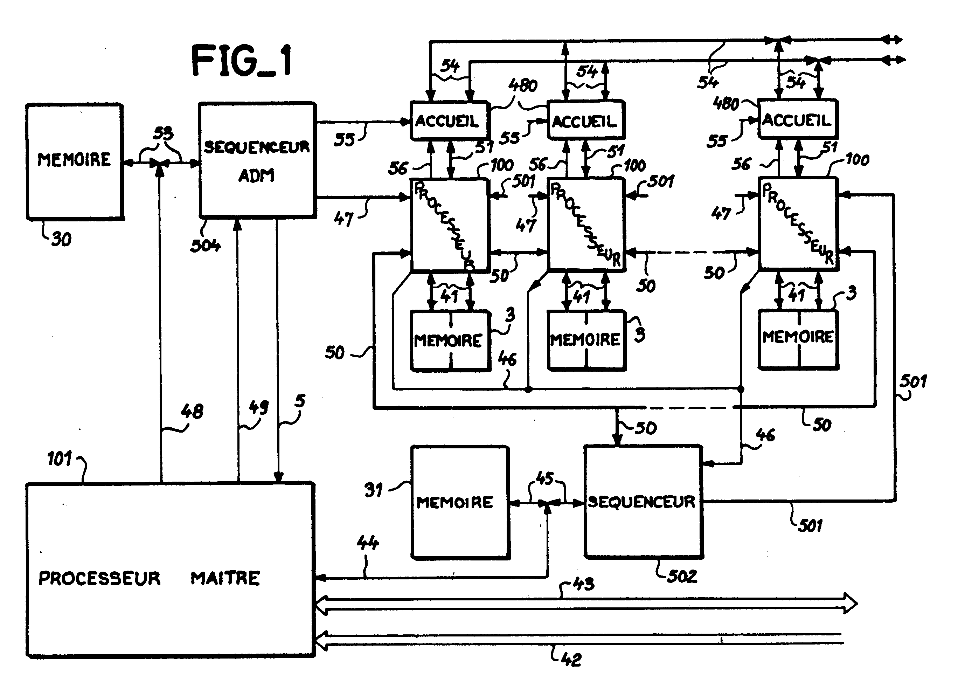

Sur les figures 1 à 12 on a utilisé les mêmes références pour désigner les mêmes éléments.

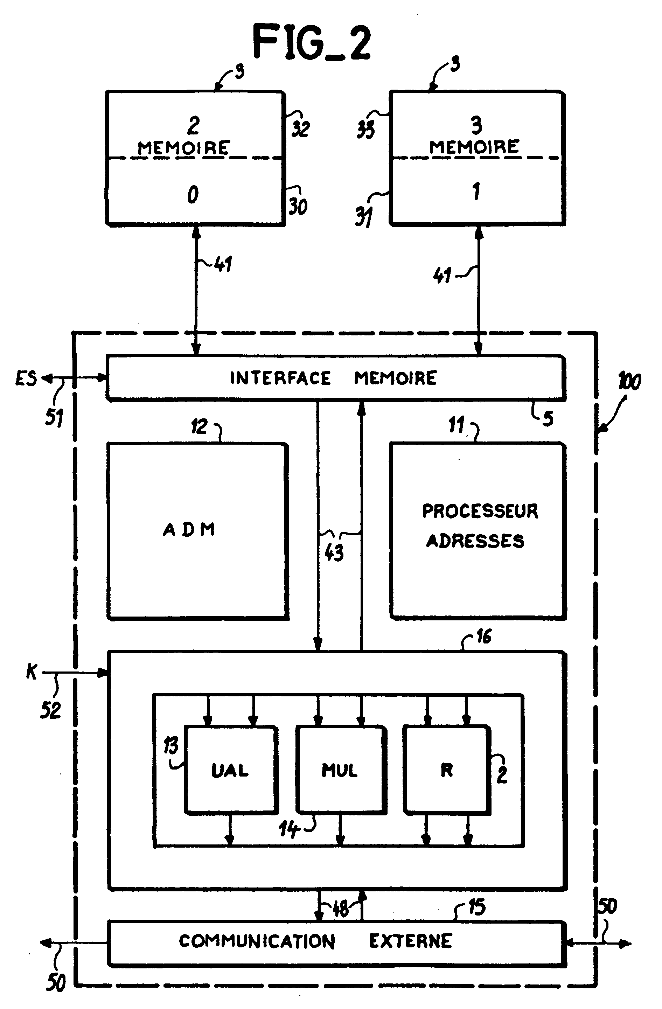

Sur la figure 1, on peut voir un exemple de réalisation d'un calculateur parallèle (SIMD) selon l'invention. Le calculateur comporte N processeurs 100. Les processeurs 100 sont par exemple des processeurs numériques de grande puissance nécessaires au traitement du signal. Un exemple du processeur 100 est illustré sur la figure 2.

Les processeurs 100 sont connectés à une mémoire de données 3.

Avantageusement, chaque processeur 100 est relié par un bus 41 à un banc de mémoire privée 3.

Avantageusement, chaque processeur 100 est relié par deux bus 41 à une mémoire 3 partagée en deux bancs mémoire.

Avantageusement, les processeurs 100 sont susceptibles de communiquer entre eux par un bus 50.

Avantageusement, le bus 50 est un bus en anneaux.

Avantageusement, les calculateurs selon l'invention comportent un séquenceur 502 fournissant par un bus 501 les instructions nécessaires au fonctionnement des processeurs 100. Le séquenceur 502 est relié à une mémoire de programme 31 par un bus 45.

Avantageusement, les données susceptibles d'être traitées par le processeur 100 sont chargées dans le banc de mémoire 3 durant l'exécution de calcul par le processeur 100. Le chargement des mémoires 3 en ce qui concerne les données transitant par le bus 51 est supervisé par un séquenceur d'accès direct mémoire 504. Le séquenceur accès direct mémoire est relié à une mémoire programme 30 par l'intermédiaire d'un bus 53.

Dans une première variante de réalisation du dispositif selon l'invention, les bancs de mémoire 3 disposent d'un bus de donnée réservé à l'accès direct mémoire.

Avantageusement, les échanges avec les bancs de mémoire 3 sont effectués au travers des processeurs 100 par le bus 41. Cette solution présente l'avantage de simplifier la connectique du calculateur selon l'invention.

Avantageusement, le séquenceur accès direct mémoire 504 est relié par un bus 47 au processeur 100. Le bus 47 permet au séquenceur accès direct mémoire 504 de sélectionner le mode d'accès direct mis en oeuvre et les adresses des mémoires 3 en ce qui concerne les données transmises par le bus 51.

Avantageusement, les processeurs 100 reçoivent par une pluralité de bus 54 à large bande, les données à stocker en mémoire 3. L'utilisation d'une pluralité de bus permet d'augmenter les débits des données transmises.

Avantageusement, les calculateurs selon la présente invention comportent des circuits d'accueil 480 permettant de transmettre sur un bus unique d'entrée sortie 51, au processeur 100 les données arrivant sur une pluralité de bus 54. Le bus 51 étant de faible longueur sa bande passante est par exemple égale à la somme de bande passante totale des bus 54. Dans une variante de réalisation sa bande passante est inférieure.

Avantageusement, les circuits d'accueil 480 permettent d'autre part, de faire l'adaptation électrique des bus 54 ce qui permet d'augmenter le débit desdits bus.

Avantageusement, les circuits d'accueil 480 permettent, par exemple en utilisant une électronique trois états, d'isoler le processeur 100 des bus 54. Cette isolation électrique permettra si tous les circuits d'accueil 480, sauf un, sont en haute impédance au processeur 100 dont le circuit d'accueil est en basse impédance de mettre les données sur le bus 54. Les circuits d'accueil 480 reçoivent en partie les commandes de fonctionnement à partir du séquenceur d'accès direct mémoire 504 par l'intermédiaire d'un bus 55. L'autre partie des commandes provient directement du processeur 100 associé par le chemin 56.

Avantageusement, le calculateur selon l'invention comporte un processeur maître 101 supervisant le bon fonctionnement du calculateur. Le processeur maître 101 est par exemple un processeur d'usage général.

Dans un exemple de réalisation du dispositif selon la présente invention le processeur maître 101 appartient à la famille des microprocesseurs d'usage général 68000 commercialisée par la Société MOTOROLA. Par exemple, le processeur maître 101 est un microprocesseur 68020 commercialisé par la Société MOTOROLA. On peut remarquer, que la puissance de calcul du processeur maître 101 est de plusieurs ordres inférieure à celle du processeur 100. Toutefois, cette puissance de calcul est suffisante pour superviser le bon fonctionnement du calculateur selon l'invention. Le processeur maître 101 est relié par un bus 42 au dispositif de commande, par exemple à un calculateur frontal, duquel il reçoit les ordres des calculs à exécuter. Le processeur maître 101 est relié d'autre part, par un bus 43 à des dispositifs de traitement amont et aval. Par dispositif de traitement amont on désigne les dispositifs de prétraitement analogique et/ou numérique du signal comme par exemple des échantillonneurs, des calculateurs de transformée de Fourier rapide, les dispositifs aval étant susceptible d'utiliser le calcul réalisé par le calculateur selon l'invention. Les dispositifs aval sont par exemple des calculateurs d'usage général. D'autre part, le processeur maître 101 est relié par un bus de donnée 48 et le bus 53 à la mémoire 30.

Le processeur maître 101 est relié par un bus 44 et le bus 45 à la mémoire 31. Le processeur maître peut ainsi charger les programmes nécessaires au fonctionnement du calculateur les mémoires 30 et 31 reliées respectivement au séquenceur d'accès direct mémoire 504 et au séquenceur 502. Ces programmes sont chargés à partir des mémoires de masse, par exemple disque magnétique ou bande magnétique, non représentés sur la figure 1.

D'autre part, le processeur maître 101 est relié par un bus de commande 49 au séquenceur d'accès direct mémoire 504.

Avantageusement, le séquenceur d'accès direct mémoire 504 va répartir le flot de données à traiter arrivant, des dispositifs de traitement amont par le bus 54 entre les divers processeurs 100 en fonctionnement. Simultanément, le séquenceur 502 va numéroter les processeurs 100 en leur assignant une tâche. Dans la mesure où tous les processeurs 100 reçoivent par l'intermédiaire du bus 501 la même commande ils exécutent simultanément le même traitement. Toutefois, chaque processeur 100 comporte un bus de commande 56 le reliant au circuit d'accueil 480. Ainsi, chaque processeur 100 peut agir sur son circuit d'accueil 480 d'une façon qui est déterminée par le résultat de calculs qu'il effectue.

Le calculateur selon la présente invention tel que décrit sur la figure 1 est un calculateur de très grande puissance et de très grande complexité. Ainsi, il est possible que des fautes de calcul soient commises par des fautes de matériel. Pour éviter que des erreurs ne se propagent le calculateur selon la présente invention comporte notamment sur certains bus des codeurs et correcteurs de parité. Par exemple on dispose de détection et correction d'erreur sur le bus 54, 51, 47, 50, 41 et 501.

Avantageusement, quand une erreur est détectée sur un bus cette erreur est stockée dans un registre d'état appelé status dans la suite de ce brevet. Par exemple, tant qu'aucune erreur n'a été détectée le registre des status ne comporte que des zéros. Quand une erreur est détectée la valeur correspondant au bus surveillé dans un registre de status passe à 1.

Avantageusement, un résumé du contenu des registres de status des processeurs est émis de façon permanente sur un bus 46 vers le séquenceur 502.

Avantageusement, pour réduire la bande passante nécessaire tous les processeurs 100 émettent simultanément sur le même bus 46. La réduction de la bande passante est effectué en reliant les fils des résultats de test à une porte logique OU. De plus, le bus 46 est un bus véhiculant un seul bit. Cette disposition permet de réduire au minimum le matériel nécessaire mais ne permet au séquenceur 502 que de savoir qu'une panne est survenue sans en connaître l'origine et la gravité. Ce n'est que si une panne est survenue et si le séquenceur 502 le juge nécessaire qu'il pourra lire par exemple par l'intermédiaire du bus 50 le contenu du registre de status de chacun ou partie des processeurs 100.

Avantageusement, le calculateur selon la présente invention comporte en plus des H processeurs nécessaires à l'exécution correcte des calculs des processeurs 100 redondants. Ces processeurs 100 redondants sont susceptibles de remplacer un processeur 100 qui exécutait un calcul s'il s'avérait que celui-ci était défectueux. Par exemple, le calculateur selon la présente invention comporte dix-huit processeurs 100 (N = 18), seize processeurs étant utilisés simultanément pour exécuter des calculs. Lors des réalisations des calculs par le calculateur selon la présente invention le séquenceur 502 assigne un numéro à chacun des H processeurs 100 devant être utilisés pour les calculs.

Avantageusement, les processeurs sont numérotés dans un ordre dépendant de leurs positions physiques à l'intérieur du calculateur.

De plus, les H processeurs devant effectuer des calculs reçoivent par le bus 50 un signal de commande, par exemple sur un bit, d'activation du processeur. Ce bit est alors mémorisé dans le processeur 100.

Les N-H processeurs 100 redondants ne sont pas utilisés pour les calculs.

Dans une première variante de réalisation du calculateur selon la présente invention, ces processeurs 100 redondants sont à l'arrêt ou dans une configuration à faible consommation életrique (low power en terminologie anglo-saxonne).

Dans une seconde variante de réalisation du calculateur selon la présente invention, les processeurs 100 redondants effectuent un calcul quelconque permettant de les maintenir en activité. Les résultats de ces calculs ne sont ni transmis ni utilisés.

Dans une troisième variante de réalisation du calculateur selon la présente invention, les processeurs 100 redondants effectuent les mêmes calculs que les H processeurs 100 effectuant des calculs utiles. Les résultats de ces calculs effectués par les processeurs 100 redondants ne sont pas pris en compte.

Les processeurs inactifs reçoivent une commande de désactivation, par exemple sur un bit. Cela permet notamment dans le cas des réalisations assignant un numéro à chaque processeur d'assigner un même numéro à un processeur actif et à un processeur inactif.

Dans l'exemple de réalisation d'un calculateur selon la présente invention illustrée sur la figure 1 seul le processeur 100 présente une redondance matérielle. Cela est justifié, d'une part par le fait que dans un exemple de réalisation les processeurs 100 ont une puissance de calcul bien supérieure à celle des autres dispositifs utilisés, et par suite une complexité de réalisation et une probabilité des pannes supérieures, d'autre part du fait que le calculateur selon la présente invention comportant de toute manière une pluralité (H) de processeurs 100, il n'est pas nécessaire de doubler le matériel mis en oeuvre.

Par exemple, dans le calculateur comportant seize (H = 16) processeurs susceptibles d'être actifs simultanément, on dispose de 1 (N = 17), ou 2 (N = 18) processeurs 100 redondants.

De même, dans une variante de réalisation d'un calculateur selon la présente invention comportant trente-deux processeurs 100 susceptibles de fonctionner simultanément (H = 32) on dispose de trois (N = 35), ou quatre (N = 36) processeurs 100 redondants.

Il est bien entendu que doubler les autres composants du calculateur selon la présente invention, à l'exception du processeur maître 101, ne sort pas du cadre de la présente invention. Le processeur maître 101 supervisant la détection des défaillances ainsi que le redémarrage du système doit nécessairement être unique. Cela n'est par gênant dans la mesure où on utilise des processeurs réalisés sous la forme d'un circuit intégré du commerce de bonne fiabilité.

Avantageusement, le processeur maître 101 a subi des tests exhaustifs ainsi qu'un rodage préalable à son utilisation (burnin en terminologie anglo-saxonne).

La variante de réalisation du calculateur selon la présente invention comportant, par exemple, un séquenceur d'accès direct mémoire 504, une mémoire 30 ou une partie de mémoire 30, un séquenceur 502, une mémoire 31, ou une partie de mémoire 31 redondant, les N-H processeurs 100, ces dispositifs sont reliés par les bus 46, puis 45 et 44 au processeur maître 101. Celui-ci peut ainsi déterminer l'origine de la panne et effectuer la reconfiguration du système s'il le juge nécessaire.

Avantageusement, le processeur maître 101 détermine, à partir des informations reçues sur le bus 42 si l'on se trouve ou non dans une phase critique, c'est-à-dire si l'interruption momentanée des calculs serait extrêmement préjudiciable à cet instant.

Si l'on se trouve dans une phase critique, le processeur maître 101 peut si cela est possible effectuer une reconfiguration partielle du système dans la mesure où cela est possible. Par exemple, si un processeur 100 émet des résultats erronés ce processeur est isolé des bus 54 par son circuit d'accueil 480. Les tâches normalement exécutées par ce processeur 100 ne sont par prises en compte du tout.

Si, d'autre part, le bus en anneaux 50 est coupé, le processeur maître 101 fait circuler les informations nécessaires dans l'autre sens sur le bus en anneaux 50 jusqu'à ce qu'elles atteignent leur destinataire.

Les N-H processeurs 100 inactifs sont transparents pour le bus 50.

Sur la figure 2, on peut voir un exemple de réalisation d'un processeur 100 selon l'invention. Pour la clarté de la figure seuls les bus de donnée ont été représentés. L'exemple de réalisation du processeur 100 selon l'invention illustré sur la figure 2 comporte une unité arithmétique et logique 13, un multiplieur 14, un banc de registre 2. Un dispositif de communication 16 permet de fournir aux entrées de l'unité arithmétique et logique 13, du multiplieur 14 du banc de registre 2 et du processeur d'adresse 11 des données nécessaires aux calculs. De même, le dispositif de communication 16 permet de recueillir le résultat des calculs de l'unité arithmétique et logique 13 et du multiplieur 14 ainsi que de lire les données stockées dans le registre 20 du banc de registres 2. D'autre part, le dispositif de communication 16 est relié par un bus bidirectionnel (ou deux bus) 43 à l'interface mémoire 5, par un bus 52 à un dispositif, non illustré, susceptible de fournir des constantes nécessaires aux calculs et aux dispositifs de communication extermes 15 par un bus bidirectionnel (ou deux bus) 48. Le dispositif de communication externe 15 est par exemple un interface de communication permettant de relier en anneaux une pluralité de processeurs 100 selon l'invention. Par exemple chaque processeur 100 est relié à son voisin de gauche et de droite. L'information peut se propager de proche en proche jusqu'au processeur auquel elle est destinée. Un tel dispositif est décrit dans le brevet français FR-A-2 569 071.

Le processeur 100 selon la présente invention comporte avantageusement un circuit d'accès direct mémoire 12, un processeur d'adresse 11. Un interface mémoire 5 permet d'accéder à une mémoire vive 3 (RAM en terminologie anglo-saxonne). La mémoire 3 est avantageusement composée de deux bancs mémoire reliés par des bus 41 à l'interface 5. Chacun des bancs mémoire est avantageusement partagé en pages mémoire, le nombre total des pages de mémoire étant avantageusement égal au nombre d'étages pipe-lines du processeur 100. Dans l'exemple illustré sur la figure 2, le processeur 100 comportant quatre étages pipe-lines étant équivalent à quatre processeurs virtuels, chaque banc mémoire 3 comporte deux pages mémoire 30 et 32 d'une part, 32 et 33 d'autre part.

Pour pouvoir accéder à une donnée en mémoire 3, le processeur d'adresse 11 transmet par le bus d'adresse, non représenté, l'adresse de la donnée à lire ou à écrire. La donnée est transmise par l'intermédiaire du bus 41 de l'interface mémoire 5 des bus 43 au dispositif de communication 16. Le dispositif de communication 16 transmet la donnée vers l'unité arithmétique et logique 13, le multiplieur 14, un des registres 20 du banc de registre 2 et/ou le dispositif de communication externe 15.

L'interface mémoire 5 est d'autre part relié à un bus d'entrée sortie 51.

Le dispositif d'accès direct mémoire 12 permet par l'intermédiaire du bus 51 de l'interface mémoire 5 de lire ou d'écrire en mémoire 3 sans passer par le dispositif de communication 16. Le partage de la mémoire vive 3 en deux bancs de mémoire permet d'effectuer les accès directs mémoire dans un banc de mémoire pendant que l'autre banc de mémoire est en train d'échanger des informations par l'intermédiaire du dispositif de communication 16.

Avantageusement le dispositif de communication 16 est relié à deux entrées de l'unité arithmétique et logique 13, à deux entrées du multiplieur 14, à une entrée du dispositif de communication extérieure 15, à deux entrées du banc 2 du registre, à une entrée de l'interface mémoire 5, à une sortie de l'interface mémoire 5, à une sortie du bus de constante 52, à une sortie de l'unité arithmétique et logique 13, à une sortie du multiplieur 14, à deux sorties du banc 2 du registre, à une sortie du dispositif de communication extérieure 15. Le dispositif de communication 16 permet, selon les instructions qu'il reçoit, d'obtenir les diverses interconnexions désirées.

Dans un exemple de réalisation le dispositif de communication 16 comporte des multiplexeurs. Par exemple le dispositif de communication 16 comporte huit multiplexeurs, 7 vers 1 c'est-à-dire pouvant choisir une sortie sur sept entrées possibles.

Le dispositif de communication 16 permet ainsi au processeur selon l'invention d'exécuter divers calculs désirés. Les instructions sur les interconnexions à réaliser sont reçues soit à partir d'une mémoire de programme, soit à partir d'un séquenceur, non représentés. Le processeur d'adresse 11 est relié au bus 41 reliant l'interface mémoire 5 à la mémoire 3. Le processeur d'adresse 11 est relié par un bus d'adresse à la mémoire vive 3.

Dans une variante de réalisation du calculateur selon l'invention, les divers éléments du calculateur comportent des dispositifs de test en lignes. En cas de détection d'un défaut de fonctionnement le contenu du registre de status est modifié.

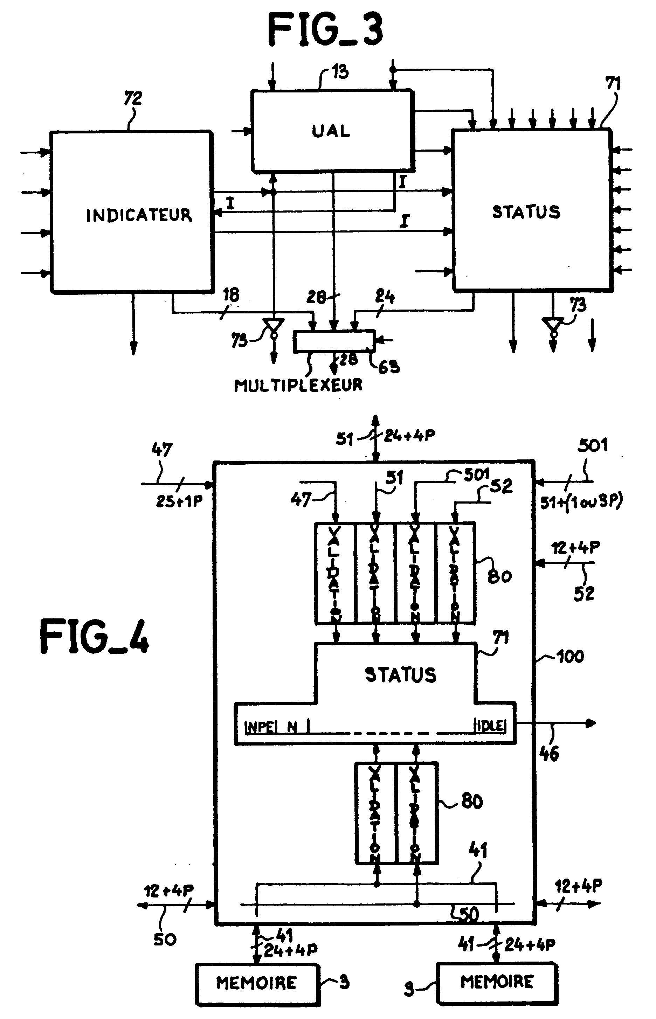

Sur la figure 3, on peut voir une variante du dispositif selon l'invention comportant des registres indicateurs ainsi que des registres de status. Ces registres reçoivent les données sur l'état du processeur 100 selon la présente invention permettant ou interdisant certaines opérations. Le dispositif indicateur 72 reçoit les indications I à partir de l'unité arithmétique et logique 13. Il les transmet aux registres de status 71. D'autre part le registre indicateur 72 et le registre de status 71 reçoivent les données provenant de l'extérieur nécessaires au bon fonctionnement du système. Les indications contenues dans le registre de status et le registre indicateur peuvent être lus directement soit sur un bus de 28 bits multiplexé par un multiplexeur 63 avec l'unité arithmétique et logique 13. Avantageusement, le registre indicateur 72 comporte un compteur commandable par l'unité arithmétique et logique 13 et par l'extérieur du processeur 100. Le compteur est par exemple un compteur d'événements.

Certains accès du, ou au, registre indicateur 72, registre de status 71 et unité arithmétique et logique 13 sont inversés par des opérateurs inverseurs 73.

Sur la figure 4, on peut voir la connexion du registre de status aux divers bus du processeur 100 selon l'invention. Bien qu'il ne soit pas possible de ne pas en tenir compte, la probabilité des pannes du dispositif selon la présente invention est très faible. Ainsi, dans la variante de réalisation illustrée sur la figure 4 on compacte au maximum toutes les informations concernant la panne pour consacrer au stockage et transmission de signaux d'erreur un minimum de matériel. Par exemple, le registre de status 71 stocke uniquement les informations sur un bit concernant le défaut de parité constaté sur divers bus.

Avantageusement, le registre des status 71 stocke aussi les informations concernant le nombre total de processeurs 100, le nombre de processeurs 100 actifs, le fait que le calculateur 100 est lui-même ou non actif etc...

Par exemple le bus 47 comporte vingt-cinq bits plus un bit de parité, le bus 51 comporte vingt-quatre bits plus quatre bits de parité, le bus 501 comporte cinquante et un bits plus un ou trois bits de parité (selon l'instant de la période de réception), le bus 52 comporte douze bits plus quatre bits de parité, chacun des bus 50 comporte douze bits plus quatre bits de parité, les bus 41 comportent chacun vingt-quatre bits plus quatre bits de parité. Chacun desdits bus est relié à un boîtier de validation 80. Le boîtier de validation inscrit une information par exemple d'un bit dans le registre de status 71 au cas ou une erreur de parité a été détectée. Le contenu du registre de status 71 est susceptible d'être lu en parallèle par le séquenceur 502 de la figure 1 grâce au bus 50. Les séquenceurs 502 stockent par exemple dans la mémoire 31 le contenu des registres de status 71 des divers processeurs 100. Ainsi le processeur maître 101 peut venir consulter dans la mémoire 31 en utilisant les bus 45 et 44 le contenu des registres de status de tous les processeurs 100.

Avantageusement, chaque fois qu'un des signaux issu des dispositifs de validation 80 est égal à 1, un bit est émis sur le bus 46 pour avertir le séquenceur 502 de l'existence d'un problème de fonctionnement dans le calculateur selon la présente invention.

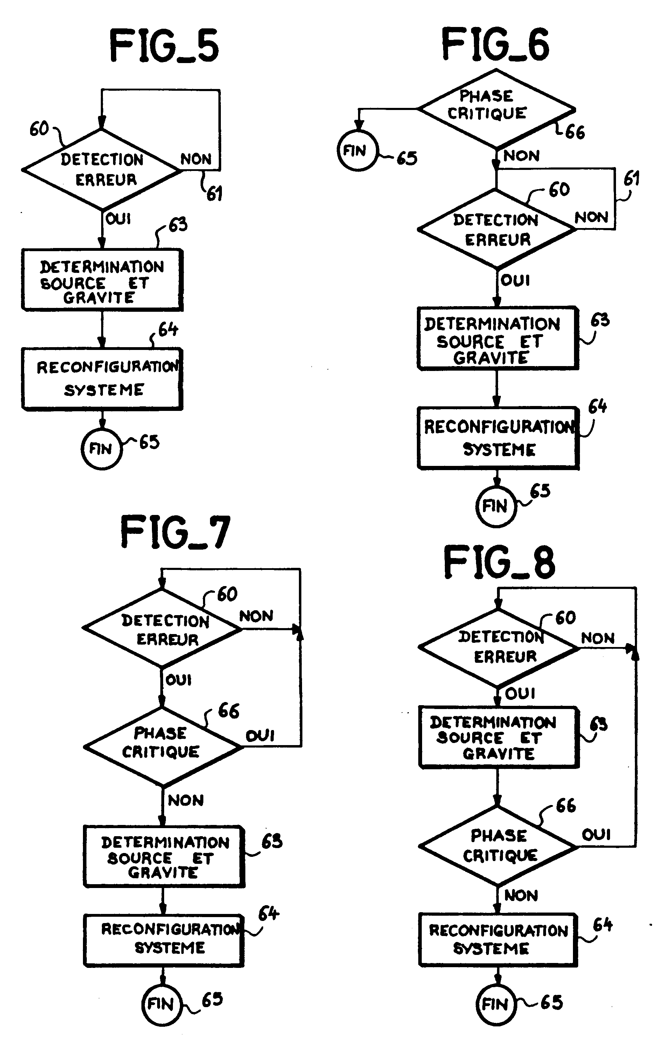

Sur la figure 5, on peut voir l'organigramme du programme exécuté par le processeur maître 101 et/ou le séquenceur 502 permettant la reconfiguration du calculateur selon la présente invention.

En 60 on détermine si une erreur de fonctionnement a été détectée.

Si non par la boucle 61 on retourne en 60.

Si oui on va en 63.

En 63 on détermine la source et la gravité de l'erreur.

On va en 64.

En 64 on effectue la reconfiguration du système par élimination du dispositif défectueux.

On va en 65.

En 65 la reconfiguration du dispositif selon la présente invention est terminée.

Sur la figure 6, on peut voir une variante de réalisation du programme de la figure 5.

En 66 on détermine si on est en phase critique.

Si oui on va en 65.

En 65 on arrête la reconfiguration.

Si non on va en 60.

En 60 on détermine si une erreur a été détectée.

Si non par la boucle 61 on retourne en 60.

Si oui on va en 63.

En 63 on détermine la source et la gravité des erreurs constatées.

On va en 64.

En 64 on effectue la reconfiguration du système.

On va en 65.

En 65 la reconfiguration du dispositif selon la présente invention est terminée.

Sur la figure 7, on peut voir une variante de réalisation du programme de la figure 5.

En 60 on détermine si une erreur de fonctionnement a été détectée.

Si non on retourne en 60.

Si oui on va en 66.

En 66 on détermine si le calculateur selon la présente invention se trouve dans une phase critique.

Si oui on retourne en 60.

Si non on va en 63.

En 63 on effectue la détermination de la source et de la gravité des erreurs constatées.

On va en 64.

En 64 on effectue la reconfiguration du système.

On va en 65.

En 65 l'exécution du programme est terminée.

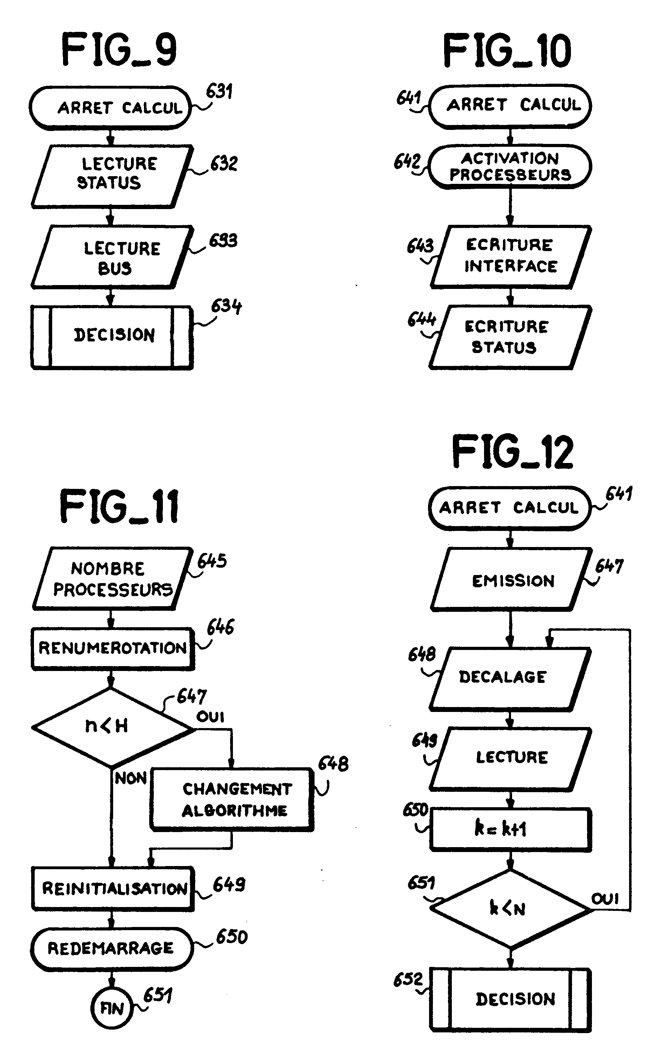

Sur la figure 8, on peut voir une variante de réalisation du programme de la figure 5.

En 60 on détermine si une erreur de fonctionnement a été détectée.

Si non on retourne en 60.

Si oui on va en 63.

En 63 on effectue la détermination de la source et de la gravité des erreurs constatées.

On va en 66.

En 66 on détermine si le calculateur selon la présente invention se trouve dans une phase critique.

Si oui on va en 60.

Si non on va en 64.

En 64 on effectue la reconfiguration du système.

On va en 65.

En 65 l'exécution du programme est terminée.

Dans une variante de réalisation non illustrée il est possible d'avoir plusieurs seuils de gravité de phase critique. La détection de ces seuils se trouve par exemple entre la détection d'erreur 60 et la détermination de la source et de la gravité d'erreur 63, d'une part, entre la détermination de la source de la gravité d'erreur 63 et la reconfiguration du système 64 d'autre part.

Sur la figure 9, on peut voir l'organigramme du sous programme de détermination de source et de la gravité d'erreur correspondant au bloc 63 des figures 7 et 8.

En 631 on effectue l'arrêt des calculs du calculateur selon la présente invention.

On va en 632.

En 632 on effectue la lecture par exemple par l'intermédiaire du bus 50 du registre de status de tous les dispositifs sous test par exemple des processeurs 100.

On va en 633.

En 633, le processeur maître 101 de la figure 1 effectue la lecture dans la mémoire 31 des valeurs contenues dans la mémoire 31.

On va en 634.

En 634 le processeur maître 101 détermine la source et la gravité des pannes survenues dans les calculateurs selon la présente invention.

Sur la figure 10, on peut voir une variante de réalisation des reconfigurations du calculateur selon la présente invention ceci correspond au bloc 64 de la figure 5.

En 641 on effectue l'arrêt des calculs.

On va en 642.

En 642 on effectue une activation des processeurs 100.

On va en 643.

On 643 en effectue l'écriture des informations sur les interfaces des processeurs 100 permettant le redémarrage du processeur.

On va en 644.

En 644 en effectue l'écriture dans le registre de status des processeurs 100.

Sur la figure 11, on peut voir une variante de réalisation de la procédure de reconfiguration du calculateur selon la présente invention. Ceci correspond au bloc 64 de la figure 5.

En 645 le processeur maître lit le nombre des processeurs 100 disponibles dans le calculateur.

On va en 646.

En 646 en effectue la renumérotation des processeurs 100 du calculateur.

Avantageusement, tous les processeurs en état de marche sont numérotés dans l'ordre de leur position physique dans le calculateur. Ceci permet de simplifier les algorithmes de fonctionnement du calculateur. Toutefois, pour ne pas perdre les calculs présents dans les divers registres et mémoires du calculateur, il est possible de garder les numéros précédents des processeurs 100 en état de marche. Les processeurs 100 redondants venant remplacer en prenant le numéro du ou des processeurs défaillants.

On va en 647.

En 647 on détermine si le nombre de processeurs en état de marche valide (N) est inférieur au nombre de processeurs susceptibles d'être utilisés (H).

Si oui on va en 648.

En 648 on effectue le changement d'algorithme permettant de fonctionner au calculateur en mode dégradé avec un nombre de processeurs 100 disponibles réduit. Dans ce cas il est possible que le processeur maître 101 soit obligé de recharger par l'intermédiaire des bus 44 et 45 de la mémoire 31 et par l'intermédiaire des bus 48 et 53 de la mémoire 30.

On va en 649.

Si non en va en 649.

En 649 on effectue la réinisialisation des processeurs 100.

On va en 650.

En 650 on effectue le redémarrage du calculateur.

On va en 651.

En 651 la reconfiguration du dispositif selon la présente invention est terminée.

Sur la figure 12, on peut voir un exemple de réalisation du sous-programme de détermination de la source et de la gravité d'erreur, correspondant au bloc 63 de la figure 5 adapté à une structure de calculateur dans lequel la lecture du mot de status est effectuée par l'intermédiaire du bus en anneau 50.

En 641 on effectue l'arrêt des calculs.

En 647 on effectue l'émission sur les bus 46 d'un bit indiquant le mauvais fonctionnement du système.

On va en 648. En 648 on effectue le décalage d'une unité des valeurs du registre de status 71 sur le bus en anneau 50.

On va en 649.

En 649 on effectue la lecture sur le bus 50 d'une valeur du registre de status 71.

On va en 650.

En 650 on incrémente le compteur d'une unité.

En 650 on va en 651.

En 651 on vérifie que la valeur des registres de status 71 de tous les processeurs 100 n'a pas encore été lue.

Si oui on va en 648.

Si non on va en 652.

En 652 le processeur maître 51 détermine les éléments du calculateur qui présentent un défaut et détermine la gravité de ces défauts.

La présente invention s'applique à la réalisation de calculateur vectoriel de grande puissance de traitement.

L'invention s'applique notamment au calcul d'images bidimensionnelles et tridimensionnelles, au traitement du signal notamment au radar et sonar, au calcul scientifique ainsi qu'à la surveillance de processus industriel.

**Revendications**

1. Dispositif de calcul reconfigurable comportant des processeurs (100) en parallèle dont un au moins est redondant, chacun des processeurs (100) possédant au moins un registre de status (71), le dispositif de calcul ayant des moyens de détection de défaillances éventuelles de ses divers composants, et ayant des moyens pour effectuer sa reconfiguration, caractérisé en ce qu'il comprend un processeur maître (101) couplé à un séquenceur (504) de répartition de flux de données à traiter (54) parmi les processeurs (100) en parallèle et susceptible de fournir simultanément à tous les processeurs (100) en parallèle en fonctionnement les instructions à exécuter, le processeur maître (101) étant relié par un bus (42) à un dispositif de commande duquel il reçoit des ordres de calcul et des informations lui indiquant la présence de phases critiques (66) où l'interruption momentanée des calculs serait préjudiciable, un séquenceur (502) de numérotation ayant des moyens pour recevoir par l'intermédiaire d'un bus (46) commun à tous les processeurs (100) en parallèle, une information de panne provenant des registres de status (71) des processeurs (100) en parallèle et des moyens pour lire par l'intermédiaire d'un bus (50) le contenu du registre de status (71) de chacun des processeurs (100) en parallèle et des moyens pour déterminer ainsi lequel des processeurs (100) est en panne, ledit séquenceur (502) de numérotation étant relié au processeur maître (101) par l'intermédiaire de bus (44, 45) pour lui transmettre l'identité du processeur (100) qui est en panne, le processeur maître (101) ayant des moyens pour ainsi déterminer l'origine de la panne et pour effectuer au moment le plus favorable selon les informations reçues par le bus (42), la reconfiguration du dispositif de calcul par l'intermédiaire des séquenceurs (502, 504) en renumérotant les processeurs (100) en parallèle et en assurant le redémarrage du dispositif de calcul.

2. Dispositif selon la revendication 1 caractérisé en ce que le processeur maître (101) possède des moyens pour déterminer l'instant à partir duquel la reconfiguration du dispositif sera moins gênante que la poursuite des calculs avec un dispositif partiellement défaillant.

3. Dispositif selon les revendications 1 et 2 caractérisé en ce que le processeur maître (101) possède des moyens pour effectuer une reconfiguration partielle du calculateur minimisant les effets de la panne d'au moins un processeur du dispositif suivi de la reconfiguration complète du dispositif à un instant où cette configuration complète est moins gênante pour les tâches assignées au dit dispositif de calcul.

4. Dispositif selon l'une quelconque des revendications précédentes, caractérisé en ce qu'il possède des moyens de fonctionner en mode dégradé, en répartissant les calculs à effectuer aux processeurs (100) en bon état de fonctionnement, dans le cas où le nombre de processeurs en panne est supérieur au nombre de processeurs (100) redondants.

5. Dispositif selon l'une des revendications précédentes, caractérisé en ce que les registres de status (71) des processeurs (100) possèdent des moyens de stockage des informations concernant le mauvais fonctionnement desdits processeurs (100).

6. Dispositif selon la revendication 5, caractérisé en ce que l'information concernant le mauvais fonctionnement du processeur (100) est l'inversion d'un bit en cas de détection d'une erreur de parité lors d'une transmission.

7. Dispositif selon les revendications 1, 5 et 6, caractérisé en ce que chaque panne détectée provoque l'envoi sur le bus (46) d'une information au séquenceur de numérotation (502).

8. Dispositif selon les revendications 1 et 7, caractérisé en ce que l'information de panne véhiculée sur le bus (46) est exprimée sur un seul bit.

9. Dispositif selon l'une quelconque des revendications précédentes caractérisé en ce que les processeurs (100) possèdent des moyens pour recevoir une commande de désactivation du processeur maître (101).

10. Dispositif selon l'une quelconque des revendications précédentes caractérisé en ce que le séquenceur de numérotation (502) possède des moyens pour fournir simultanément à tous les processeurs (100) en fonctionnement les instructions à exécuter.

11. Dispositif selon l'une quelconque des revendications précédentes caractérisé en ce que lors de l'initiation des calculs, à chaque processeur (100) est assigné un numéro.

12. Dispositif selon l'une quelconque des revendications précédentes caractérisé en ce qu'il comporte un bus en anneau (50) reliant les processeurs (100).

13. Dispositif selon l'une quelconque des revendications précédentes caractérisé en ce qu'en cas de panne d'un processeur (100), les processeurs (100) en état de marche sont renumérotés en fonction de leur position physique dans le dispositif.

14. Dispositif selon l'une quelconque des revendications précédentes caractérisé en ce qu'en cas de panne d'un processeur (100), le numéro du processeur (100) en panne est assigné à un processeur redondant.

**Claims**

1. Reconfigurable calculation device comprising processors (100) in parallel of which at least one is redundant, each of the processors (100) possessing at least one status register (71), the calculation device having means of detection of possible faults in its various components, and having means for effecting its reconfiguration, characterised in that it comprises a master processor (101) coupled to a sequencer (504) for sharing a flow of data to be processed (54) among the processors (100) in parallel and capable of simultaneously supplying all the processors (100) in parallel in operation with the instructions to be executed, the master processor (101) being linked by a bus (42) to a control device from which it receives calculation orders and information indicating to it the presence of critical phases (66) in which the momentary interruption of the calculations would be prejudicial, a numbering sequencer (502) having means for receiving by the intermediary of a bus (46) which is common to all the processors (100) in parallel, a breakdown information item originating from the status registers (71) of the processors (100) in parallel and means for reading by the intermediary of a bus (50) the contents of the status register (71) of each of the processors (100) in parallel and means for thus determining which of the processors (100) is broken down, the said numbering sequencer (502) being linked to the master processor (101) by the intermediary of the bus (44, 45) in order to transmit to it the identity of the processor (100) which is broken down, the master processor (101) having means for thus determining the origin of the breakdown and for effecting at the most favourable moment according to the information received by the bus (42), the reconfiguration of the calculation device by the intermediary of the sequencers (502, 504) by renumbering the processors (100) in parallel and by carrying out the restarting of the calculation device.

2. Device according to Claim 1, characterised in that the master processor (101) possesses means for determining the instant from which the reconfiguration of the device will be less troublesome than the pursuit of the calculations with a partially faulty device.

3. Device according to Claims 1 and 2 characterised in that the master processor (101) possesses means for effecting partial reconfiguration of the computer minimising the effects of the breakdown of at least one processor of the device followed by the complete reconfiguration of the device at an instant at which this complete configuration is less troublesome for the tasks assigned to the said calculation device.

4. Device according to any one of the preceding claims, characterised in that it possesses means for operating in degraded mode, by sharing the calculations to be effected with the processors (100) which are in good operating condition, in the case where the number of broken-down processors is greater than the number of redundant processors (100).

5. Device according to one of the preceding claims, characterised in that the status registers (71) of the processors (100) possess means for storing information relating to the incorrect operation of the said processors (100).

6. Device according to Claim 5, characterised in that the information item relating to the incorrect operation of the processor (100) is the inversion of one bit in the case of detection of a parity error during a transmission.

7. Device according to Claims 1, 5 and 6, characterised in that each breakdown detected gives rise to the sending of an information item to the numbering sequencer (502) on the bus (46).

8. Device according to Claims 1 and 7, characterised in that the breakdown information item transported on the bus (46) is expressed in a single bit.

9. Device according to any one of the preceding claims, characterised in that the processors (100) possess means for receiving a de-activation command from the master processor (101).

10. Device according to any one of the preceding claims characterised in that the numbering sequencer (502) possesses means for simultaneously supplying all the processors (100) in operation with the instructions to be executed.

11. Device according to any one of the preceding claims characterised in that during initiation of the calculations, a number is assigned to each processor (100).

12. Device according to any one of the preceding claims characterised in that it comprises a ring bus (50) linking the processors (100).

13. Device according to any one of the preceding claims characterised in that in the case of a breakdown of a processor (100), the processors (100) which are in working order are renumbered on the basis of their physical position in the device.

14. Device according to any one of the preceding claims characterised in that in the case of a breakdown of a processor (100), the number of the broken-down processor (100) is assigned to a redundant processor.

**Patentansprüche**

1. Rekonfigurierbare Rechenanordnung mit parallelen Prozessoren (100), von denen wenigstens einer redundant ist, wobei jeder dieser Prozessoren (100) wenigstens ein Statusregister (71) aufweist, wobei die Rechenanordnung Mittel zum Feststellen möglicher Ausfälle ihrer verschiedenen Baueinheiten enthält und Mittel zur Durchführung ihrer Rekonfiguration aufweist, gekennzeichnet durch einen Hauptprozessor (101), der an eine Ablaufsteuereinheit (504) zum Verteilen des Flusses der zu verarbeitenden Daten (54) unter den parallelen Prozessoren (100) und zum gleichzeitigen Liefern der auszuführenden Befehle an alle in Betrieb befindlichen parallelen Prozessoren (100), wobei der Hauptprozessor (101) über einen Bus (42) an eine Steuervorrichtung angeschlossen ist, von der er Rechenbefehle und Informationen erhält, die ihm die Anwesenheit kritischer Phasen (66) anzeigen, in denen eine momentane Unterbrechung von Berechnungen nachteilig wäre, eine Numerier-Fortschalteinheit (502), die Mittel aufweist, um über einen allen parallelen Prozessoren (100) gemeinsamen Bus (46) eine Fehlerinformation zu empfangen, die von Statusregistern (71) der parallelen Prozessoren (100) kommt, sowie Mittel enthält, um über einen Bus (50) den Inhalt des Statusregisters (71) jedes parallelen Prozessors (100) zu lesen, sowie ferner Mittel aufweist, um auf diese Weise den fehlerhaften Prozessor (100) zu bestimmen, wobei die Numerier-Fortschalteinheit (502) über einen Bus (44, 45) mit dem Hauptprozessor (101) verbunden ist, um diesem die Identität des fehlerhaften Prozessors (100) mitzuteilen, wobei der Hauptprozessor (101) Mittel enthält, um den Ursprung des Fehlers zu bestimmen und um im günstigsten Augenblick gemäß den vom Bus (42) empfangenen Informationen die Rekonfigurierung der Rechenanordnung mit Hilfe der Fortschalteinheiten (502, 504) durchzuführen, indem die parallelen Prozessoren (100) umnumeriert werden und indem das Wiederanlaufen der Rechenanordnung gewährleistet wird.

2. Anordnung nach Anspruch 1, dadurch gekennzeichnet, daß der Hauptprozessor (101) Mittel enthält, um den Zeitpunkt zu bestimmen, nach dem die Rekonfigurierung der Anordnung weniger störend als die Fortsetzung der Berechnungen mit einer teilweise ausgefallenen Anordnung ist.

3. Anordnung nach Anspruch 1 oder 2, dadurch gekennzeichnet, daß der Hauptprozessor (101) Mittel enthält, um eine teilweise Rekonfigurierung des Rechners durchzuführen, die die Wirkungen des Fehlers wenigstens eines Prozessors der Anordnung minimieren, woran sich die vollständige Rekonfigurierung der Anordnung an einem Zeitpunkt anschließt, an dem diese vollständige Konfigurierung für die der Rechenanordnung zugeordneten Aufgaben weniger störend ist.

4. Anordnung nach einem der vorhergehenden Ansprüche, gekennzeichnet durch Mittel zum Arbeiten in einem reduzierten Betrieb durch Verteilen der durchzuführenden Berechnungen auf Prozessoren (100), die sich in einem guten Betriebszustand befinden, für den Fall, daß die Anzahl der fehlerhaften Prozessoren größer als die Anzahl der redundanten Prozessoren (100) ist.

5. Anordnung nach einem der vorhergehenden Ansprüche, dadurch gekennzeichnet, daß die Statusregister (71) der Prozessoren (100) Mittel zum Speichern von Informationen enthalten, die die schlechte Arbeitsweise dieser Prozessoren (100) betreffen.

6. Anordnung nach Anspruch 5, dadurch gekennzeichnet, daß die das schlechte Arbeiten des Prozessors (100) betreffende Information aus der Invertierung eines Bits im Falle der Feststellung eines Paritätsfehlers bei einer Übertragung besteht.

7. Anordnung nach den Ansprüchen 1, 5 und 6, dadurch gekennzeichnet, daß jeder festgestellte Fehler das Aussenden einer Information zur Numerier-Fortschalteinheit (502) über den Bus (46) hervorruft.

8. Anordnung nach den Ansprüchen 1 und 7, dadurch gekennzeichnet, daß die über den Bus (46) übertragene Fehlerinformation nur durch ein einziges Bit ausgedrückt wird.

9. Anordnung nach einem der vorhergehenden Ansprüche, dadurch gekennzeichnet, daß die Prozessoren (100) Mittel zum Empfangen eines Deaktivierungsbefehls für den Hauptprozessor (101) enthalten.

10. Anordnung nach einem der vorhergehenden Ansprüche, dadurch gekennzeichnet, daß die Numerier-Fortschalteinheit (502) Mittel enthält, um gleichzeitig an alle in Betrieb befindlichen Prozessoren (100) die auszuführenden Befehle zu liefern.

11. Anordnung nach einem der vorhergehenden Ansprüche, dadurch gekennzeichnet, daß bei Beginn der Berechnungen jedem Prozessor (100) eine Nummer zugeordnet wird.

12. Anordnung nach einem der vorhergehenden Ansprüche, gekennzeichnet durch einen Ringbus (50), der die Prozessoren (100) verbindet.

13. Anordnung nach einem der vorhergehenden Ansprüche, dadurch gekennzeichnet, daß im Falle eines Fehlers eines Prozessors (100) die im Betriebszustand befindlichen Prozessoren (100) in Abhängigkeit von ihrer physischen Position in der Anordnung umnumeriert werden.

14. Anordnung nach einem der vorhergehenden Ansprüche, dadurch gekennzeichnet, daß im Falle eines Fehlers eines Prozessors (100) die Nummer des fehlerhaften Prozessors (100) einem redundanten Prozessor zugeordnet wird.

# FIG_1

EP 0 272 165 B1

# FIG_2

MEMOIRE
2
0

MEMOIRE
3
1

INTERFACE MEMOIRE

ES

ADM

PROCESSEUR
ADRESSES

K

UAL

MUL

R

COMMUNICATION EXTERNE

# FIG_3

# FIG_4

# FIG_5

DETECTION ERREUR — 60
NON — 61
OUI

DETERMINATION SOURCE ET GRAVITE — 63

RECONFIGURATION SYSTEME — 64

FIN — 65

# FIG_6

PHASE CRITIQUE — 66
FIN — 65
NON

DETECTION ERREUR — 60
NON — 61
OUI

DETERMINATION SOURCE ET GRAVITE — 63

RECONFIGURATION SYSTEME — 64

FIN — 65

# FIG_7

DETECTION ERREUR — 60
NON
OUI

PHASE CRITIQUE — 66
OUI
NON

DETERMINATION SOURCE ET GRAVITE — 63

RECONFIGURATION SYSTEME — 64

FIN — 65

# FIG_8

DETECTION ERREUR — 60
NON
OUI

DETERMINATION SOURCE ET GRAVITE — 63

PHASE CRITIQUE — 66
OUI
NON

RECONFIGURATION SYSTEME — 64

FIN — 65

# FIG_9

ARRET CALCUL —631

LECTURE STATUS —632

LECTURE BUS —633

DECISION —634

# FIG_10

641— ARRET CALCUL

642— ACTIVATION PROCESSEURS

643— ECRITURE INTERFACE

644— ECRITURE STATUS

# FIG_11

NOMBRE PROCESSEURS —645

RENUMEROTATION —646

$n < H$ —647    OUI

NON

CHANGEMENT ALGORITHME —648

REINITIALISATION —649

REDEMARRAGE —650

FIN —651

# FIG_12

ARRET CALCUL —641

EMISSION —647

648— DECALAGE

649— LECTURE

650— $k = k+1$

651— $k < N$    OUI

652— DECISION

17